(19) Europäisches Patentamt
European Patent Office
Office européen des brevets

(11) **EP 3 246 551 A1**

(12) **EUROPEAN PATENT APPLICATION**

(43) Date of publication:
**22.11.2017 Bulletin 2017/47**

(51) Int Cl.:
*F02D 41/30* (2006.01)   *F02D 41/24* (2006.01)
*F02D 41/02* (2006.01)   *F02D 41/00* (2006.01)
*B60W 30/184* (2012.01)   *B60W 30/186* (2012.01)
*B60W 10/02* (2006.01)   *F02D 41/10* (2006.01)
*F02P 5/15* (2006.01)

(21) Application number: **17161148.6**

(22) Date of filing: **15.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.05.2016 GB 201608625**

(71) Applicant: **Jaguar Land Rover Limited
Coventry, Warwickshire CV3 4LF (GB)**

(72) Inventors:
• **Owens, Adam
Coventry, Warwickshire CV3 4LF (GB)**
• **Case, Timothy
Coventry, Warwickshire CV3 4LF (GB)**

(74) Representative: **Borton, Claire
Jaguar Land Rover
Patents W/1/073
Abbey Road
Whitley
Coventry CV3 4LF (GB)**

(54) **ENGINE CONTROLLER**

(57)    Embodiments of the present invention provide systems and methods for controlling vehicles having internal combustion engines and manual transmissions to reduce the amount of energy that is absorbed by a clutch of the vehicle. In particular, embodiments of the present invention may reduce the amount of energy absorbed by a clutch during launches of a motor vehicle.

Figure 2

**Description**

TECHNICAL FIELD

The present disclosure relates to an engine controller, particularly but not exclusively to an engine controller for a vehicle having a manual transmission. Aspects of the invention relate to a controller, a processor, a computer program product, a non-transitory computer readable medium, an engine, a method and a vehicle.

BACKGROUND

In motor vehicles having an internal combustion engine and a manual gearbox it is usual to provide a clutch that is operable by the driver to disconnect the gearbox from the engine. This allows the engine to rotate at a different velocity to the input shaft of the gearbox when the clutch is opened, which is necessary to maintain the engine rotational velocity within the operating range of the engine during launch of the vehicle. It also allows the user to briefly stop transmitting power through the gearbox so that they can change between gear ratios. The clutch that is employed is typically a friction clutch comprising a plurality of friction plates that are pushed against one another by springs. The user is able to vary the pressure with which the plates are pushed against each other by varying the position of the clutch pedal. The pressure may be varied between an "open" state in which the plates do not contact each other so the contact pressure is zero and a "closed" state in which the pressure is at a maximum value. In general, the maximum pressure will be sufficient to prevent slip of the clutch under normal operating conditions of the vehicle.

When a clutch is moved from the open position to the closed position and the rotational velocity of the clutch input shaft is different from the rotational velocity of the clutch output shaft some energy is lost within the clutch. This is because the difference in rotational velocity between the input shaft and the output shaft of the clutch causes the pressure plates to slip relative to one another during engagement, so energy is lost as friction. Because combustion engines cannot generally operate below a threshold rotational velocity it is currently unavoidable that some energy will be lost during launch, as the clutch output shaft (which is connected to the wheels via the gearbox) is necessarily stationary when the vehicle is stationary. Energy may also be lost during gear shifts if the engine speed when the clutch is closed is different from the speed of the clutch output shaft in the new gear.

The energy that is lost within a clutch causes the clutch to heat up. If too much energy is absorbed by a clutch then it may overheat, which can damage the clutch. Accordingly, clutches in modern vehicles may be provided with heat management apparatus to help them to dissipate the heat that is generated during the expected use of the vehicle, and they may be selected to have a sufficiently large thermal mass that the energy they absorb during the expected use of the vehicle will not damage the clutch. The cost and weight of a vehicle clutch therefore increases as the amount of heat that is expected to be generated within the clutch during normal use increases.

It is an object of embodiments of the invention to at least mitigate one or more of the problems of the prior art.

SUMMARY OF THE INVENTION

Aspects and embodiments of the invention provide a controller, a processor, a computer program product, a non-transitory computer readable medium, an engine, a method and a vehicle as claimed in the appended claims.

According to an aspect of the invention, there is provided a controller for an engine of a motor vehicle, the controller having input means configured to receive an input indicative of a position of a clutch pedal of the vehicle, and processing means configured to select one of a plurality of engine maps in dependence on the position of the clutch pedal and to initiate control of the engine using the selected engine map, wherein, during a launch of the vehicle the processing means is configured to:

> select a first engine map when the position of the clutch pedal is between a fully open position and an intermediate position;
> select a second engine map when the position of the clutch pedal is between the intermediate position and a fully closed position; and
> select a third engine map when the position of the clutch pedal is in the fully closed position,

wherein control of the engine using the first engine map causes the engine to provide reduced power output for a first set of input conditions compared to control of the engine using the third engine map and control of the engine using the second engine map causes the engine to provide increased power output for the first set of input conditions compared to control of the engine using the third engine map. It will be understood that the power output is given by the product of the rotational velocity of the crankshaft of the engine and the torque produced at the crankshaft. Accordingly, increasing the rotational velocity at the crankshaft at a given load causes the engine to provide an increased power output. Similarly, reducing the rotational velocity at the crankshaft at a given load causes the engine to provide a reduced power output.

It will be understood that in vehicles with manual transmissions the position of the clutch plates is directly related to the position of the clutch pedal. Accordingly, within the scope of the present invention an input indicative of the position of the clutch plates is considered to also be indicative of the position of the clutch pedal.

Advantageously, such a controller reduces the amount of energy that is absorbed by a clutch during a launch of the vehicle.

Optionally, the processing means may be an electronic processor. Optionally, the input means may be a wired or wireless connection.

Optionally, the first, second and third engine maps are fuel maps, wherein:

the first engine map provides a reduced fuel injection rate compared to the third engine map, thereby to provide a reduced power output; and
the second engine map provides an increased fuel injection rate compared to the third engine map, thereby to provide an increased power output.

In an embodiment the controller is configured to select said third engine map when the clutch pedal is in said fully open position. It will be understood that using the same engine map when the clutch is open as is used when the clutch is closed may prevent a driver from believing that the vehicle controller is limiting performance of the vehicle.

Optionally, the controller is configured to initiate individual control of a plurality of variable lift valves, each of said variable lift valves being associated with one of a plurality of cylinders of the engine,

wherein the controller is configured to initiate control of the variable lift valves to reduce the power output provided by the engine during a transition between said third engine map and said first engine map. Using variable lift valves associated with individual cylinders of the engine may allow a change in power output after the engine map has been changed to be reduced more rapidly than could be achieved by controlling the fuel injection rate and/or the position of a throttle valve.

In an embodiment the controller is configured to initiate individual control of a plurality of variable lift valves, each of said variable lift valves being associated with one of a plurality of cylinders of the engine,

wherein the controller is configured to initiate control of the variable lift valves to reduce the power output provided by the engine during a transition between said second engine map and said third engine map. Using variable lift valves associated with individual cylinders of the engine may allow a change in power output after the engine map has been changed to be reduced more rapidly than could be achieved by controlling the fuel injection rate and/or the position of a throttle valve.

In an embodiment said variable lift valves are variable lift inlet valves and the controller is configured to control the plurality of variable lift inlet valves to reduce a mass of air allowed into the cylinder during an induction stroke of the cylinder, thereby to reduce the power output provided by the engine. Optionally, the valves may be opened at a relatively late stage in said induction stroke, thereby causing the pressure within the cylinders to be relatively low for an early portion of the induction strokes. This may cause the rotational velocity of the crankshaft to reduce, thereby reducing the power output of the engine.

Optionally the controller is configured to control a supercharger of the engine, wherein the controller is configured to control the supercharger to increase the power output provided by the engine during a transition between the first engine map and the second engine map. The supercharger may be a turbocharger driven by exhaust gas or an electronic supercharger. Advantageously the controller may be configured to control the supercharger to provide an overboost during a transition between the first engine map and the second engine map.

In an embodiment the selection of engine maps in dependence on the clutch position may be selectively activated or deactivated by a user of the vehicle. For example, selection of engine maps in dependence on the clutch position may only be performed when a user engages a "sport" mode of the vehicle, as it may only be necessary to reduce the amount of heat absorbed by a clutch of the vehicle when the vehicle is being driven aggressively.

Optionally, the first set of input conditions comprises an input relating to an accelerator pedal position and an input relating to a rotational velocity of the engine.

According to another aspect of the invention there is provided a method of controlling an engine of a motor vehicle comprising:

receiving an input indicative of a position of a clutch pedal of the vehicle;
controlling the engine using a first engine map when the position of the clutch pedal is between a fully open position and an intermediate position;
controlling the engine using a second engine map when the position of the clutch pedal is between the intermediate position and a fully closed position; and
controlling the engine using a third engine map when the position of the clutch pedal is in the fully closed position,

wherein control of the engine using the first engine map causes the engine to provide reduced power output for a first set of input conditions compared to control of the engine using the third engine map and control of the engine using the second engine map causes the engine to provide increased power output for the first set of input conditions compared to control of the engine using the third engine map.

Optionally, the first, second and third engine maps are fuel maps, wherein:

the first engine map provides a reduced fuel injection rate compared to the third engine map, thereby to provide a reduced power output; and
the second engine map provides an increased fuel injection rate compared to the third engine map, thereby to provide an increased power output.

In an embodiment the method comprises selecting said third engine map when the clutch pedal is in said fully open position. It will be understood that using the same engine map when the clutch is open as is used when the clutch is closed may prevent a driver from believing that the vehicle controller is limiting performance of the vehicle.

Optionally, the method comprises initiating individual control of a plurality of variable lift valves, each of said variable lift valves being associated with one of a plurality of cylinders of the engine,

wherein the method comprises initiating control of the variable lift valves to reduce the power output provided by the engine during a transition between said third engine map and said first engine map. Using variable lift valves associated with individual cylinders of the engine may allow a change in power output after the engine map has been changed to be reduced more rapidly than could be achieved by controlling the fuel injection rate and/or the position of a throttle valve.

In an embodiment the method comprises initiating individual control of a plurality of variable lift valves, each of said variable lift valves being associated with one of a plurality of cylinders of the engine,

wherein the method comprises initiating control of the variable lift valves to reduce the power output provided by the engine during a transition between said second engine map and said third engine map. Using variable lift valves associated with individual cylinders of the engine may allow a change in power output after the engine map has been changed to be reduced more rapidly than could be achieved by controlling the fuel injection rate and/or the position of a throttle valve.

In an embodiment said variable lift valves are variable lift inlet valves and the method comprises controlling the plurality of variable lift inlet valves to reduce a mass of air allowed into the cylinder during an induction stroke of the cylinder, thereby to reduce the power output provided by the engine. Optionally, the valves may be opened at a relatively late stage in said induction stroke, thereby causing the pressure within the cylinders to be relatively low for an early portion of the induction strokes. This may cause the rotational velocity of the crankshaft to reduce, thereby reducing the power output of the engine.

Optionally the method comprises controlling a supercharger of the engine to increase the power output provided by the engine during a transition between the first engine map and the second engine map. The supercharger may be a turbocharger driven by exhaust gas or an electronic supercharger. Advantageously the method may comprise controlling the supercharger to provide an overboost during a transition between the first engine map and the second engine map.

In an embodiment the method may be selectively activated or deactivated by a user of the vehicle. For example, selection of engine maps in dependence on the clutch position may only be performed when a user engages a "sport" mode of the vehicle, as it may only be necessary to reduce the amount of heat absorbed by a clutch of the vehicle when the vehicle is being driven aggressively.

Optionally, the first set of input conditions comprises an input relating to an accelerator pedal position and an input relating to a rotational velocity of the engine.

According to another aspect of the invention there is provided a controller for controlling an engine of a motor vehicle having a plurality of variable lift valves, each of said variable lift valves being associated with one of a plurality of cylinders of the engine, the controller having input means configured to receive an input indicative of a position of a clutch pedal of the vehicle and processing means configured to select one of a plurality of engine maps in dependence on the position of the clutch pedal and to initiate control the engine using the selected engine map, wherein:

said plurality of engine maps includes a default engine map and a first engine map;

control of the engine using said first engine map causes the engine to produce a reduced power output for a given set of input conditions compared to the default engine map; and

when a transition from said default engine map to said first engine map is effected the controller is configured to initiate control of the one or more variable lift inlet valves to reduce a power output of the engine. Such a controller is operable to reduce an amount of energy absorbed by a clutch of the vehicle during a launch.

Optionally, reducing the power output comprises reducing a rotational velocity of the engine.

Optionally, the variable lift valves are variable lift inlet valves and when said transition is effected the controller is configured to delay opening of said valves during induction strokes of the cylinders that the valves are associated with, thereby to reduce the power output of the engine. Advantageously, this causes a rapid reduction in the power output when the transition is effected.

According to another aspect of the invention there is provided a method of controlling an engine of a motor vehicle having a plurality of variable lift valves, each of said variable lift valves being associated with one of a plurality of cylinders of the engine, the method comprising receiving an input indicative of a position of a clutch pedal of the vehicle, selecting one of a plurality of engine maps in dependence on the position of the clutch pedal and initiating control the engine using the selected engine map, wherein:

said plurality of engine maps includes a default engine map and a first engine map;

control of the engine using said first engine map causes the engine to produce a reduced power output for a given set of input conditions compared to the default engine map; and

when a transition from said default engine map to said first engine map is effected the controller is configured to initiate control of the one or more variable lift inlet valves to reduce a power output of the engine.

Optionally, reducing the power output comprises reducing a rotational velocity of the engine.

Optionally, the variable lift valves are variable lift inlet valves and when said transition is effected the controller is configured to delay opening of said valves during induction strokes of the cylinders that the valves are associated with, thereby to reduce the power output of the engine. Advantageously, this causes a rapid reduction in the power output when the transition is effected.

In another aspect of the invention there is provided a controller for controlling an engine of a motor vehicle having a plurality of variable lift valves, each of said variable lift valves being associated with one of a plurality of cylinders of the engine, the controller having input means configured to receive an input indicative of a current rotational velocity of the engine, an input indicative of a current velocity of the vehicle, an input indicative of a current position of a clutch pedal of the vehicle and an input indicative of a current position of a gear selector of the vehicle, wherein the controller is configured to identify an upshift event in dependence on the position of the clutch pedal and the gear selector and, upon identification of said upshift event, to control the valves to reduce a rotational velocity of the engine to a target rotational velocity. Such a controller is operable to reduce an amount of energy absorbed by a clutch of the vehicle during upshifts.

Optionally, the target rotational velocity substantially corresponds to an expected rotational velocity of the engine after completion of the upshift event. This further reduces the amount of energy absorbed, because it causes the rotational velocities of the clutch input and output shafts to be substantially equal when the clutch is closed.

In an embodiment controlling the valves to reduce a rotational velocity of the engine comprises controlling the valves to reduce an amount of air allowed into each of the cylinders during an induction stroke of the cylinder, thereby to create a reduced pressure in the cylinders during the induction stroke. Advantageously, this causes a rapid reduction in the rotational velocity of the crankshaft.

In another aspect of the invention there is provided a method of controlling an engine of a motor vehicle having a plurality of variable lift valves, each of said variable lift valves being associated with one of a plurality of cylinders of the engine, the method comprising:

receiving an input indicative of a current rotational velocity of the engine;

receiving an input indicative of a current velocity of the vehicle;

receiving an input indicative of a current position of a clutch pedal of the vehicle;

receiving an input indicative of a current position of a gear selector of the vehicle;

identifying an upshift event in dependence on the position of the clutch pedal and the gear selector; and

upon identification of said upshift event, controlling the valves to reduce a rotational velocity of the engine to a target rotational velocity.

Optionally, the target rotational velocity substantially corresponds to an expected rotational velocity of the engine after completion of the upshift event. This further reduces the amount of energy absorbed, because it causes the rotational velocities of the clutch input and output shafts to be substantially equal when the clutch is closed.

In an embodiment controlling the valves to reduce a rotational velocity of the engine comprises controlling the valves to reduce an amount of air allowed into each of the cylinders during an induction stroke of the cylinder, thereby to create a reduced pressure in the cylinders during the induction stroke. Advantageously, this causes a rapid reduction in the rotational velocity of the crankshaft.

According to another aspect there is provided a computer program product executable on a processor so as to implement a method as described above.

According to another aspect there is provided a non-transitory computer readable medium carrying computer readable code which when executed causes a vehicle to carry out a method as described above.

According to another aspect there is provided a processor arranged to implement a method or a computer program product as described above.

According to another aspect there is provided an engine comprising a controller as described above. Optionally, the engine comprises a supercharger. Further optionally, engine comprises a plurality of variable lift inlet valves, each of said variable lift inlet valves being associated with one of a plurality of cylinders of the engine.

According to another aspect there is provided a vehicle comprising a controller, a computer program product, a non-transitory computer readable medium, a processor or an engine as described above.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

BRIEF DESCRIPTION OF THE DRAWINGS

One or more embodiments of the invention will now be described by way of example only, with reference to the accompanying drawings, in which:

Figure 1 shows a schematic diagram of the components included in the powertrain of a prior art vehicle fitted with a manual transmission;
Figure 2 shows a schematic diagram of the components included in the powertrain of a vehicle fitted with a manual transmission and a controller in an embodiment of the present invention;
Figure 3a shows a graph of clutch input shaft speed and clutch output speed during a high acceleration launch of a prior art vehicle;
Figure 3b shows a graph of clutch input shaft speed and clutch output speed during a high acceleration launch of a vehicle in an embodiment of the present invention;
Figures 4a-4c show a first, a second and a third, default, engine map for use in accordance with the present invention;
Figure 5 shows an engine cylinder having variable lift inlet and outlet valves; and

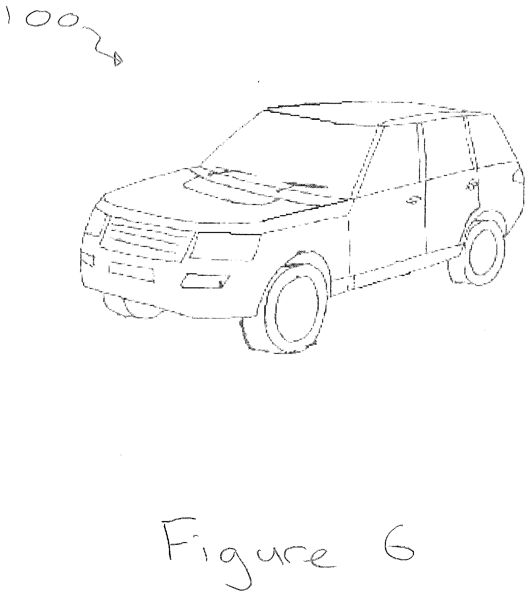

Figure 6 shows a vehicle that may incorporate an engine controller in an embodiment of the present invention.

DETAILED DESCRIPTION

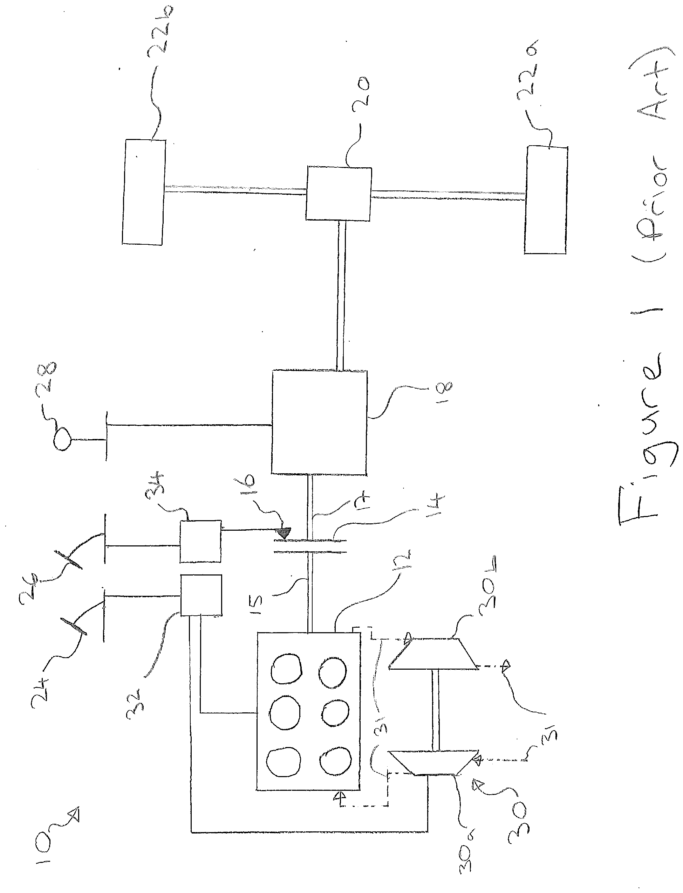

Figure 1 shows a prior art vehicle powertrain 10 comprising an internal combustion engine 12, a manual gearbox 18, a clutch 14, a differential 20 and a pair of driven wheels 22a, 22b. When the clutch 14 is closed the engine is configured to deliver torque to the wheels 22a, 22b via the gearbox 18. Clutch 14 is illustrated as an electrically controlled clutch having an actuator 16 that is controlled by clutch controller 34. Clutch controller 34 is configured to receive an input signal indicative of the position of clutch pedal 26 and to control actuator 16 to open the clutch in dependence on the displacement of the clutch pedal 26 from its neutral position. It will be understood that when clutch 14 is open the engine is not operable to transmit torque to the gearbox 18 or the wheels 22a, 22b.

Engine 12 is controlled by engine controller 32, which is operable to receive an input from accelerator pedal 24 and to control the amount of air and fuel injected into the engine 12 in dependence on the position of the accelerator pedal 24 and other parameters that will be known to the skilled person. The air mass flow rate may be controlled using a throttle valve (not shown) and the fuel mass flow rate may be controlled by a plurality of fuel injectors (not shown). In the illustrated powertrain 10 the engine 12 is provided with a turbocharger 30 comprising a compressor 30a and a turbine 30b. The flow of gas through the turbocharger and the engine is illustrated by dashed lines 31, although it will be understood that several components of the air intake and exhaust systems have been omitted for clarity. Engine controller 32 is operable to control the turbocharger 30 so as to adjust the pressure boost provided at the engine air intake by the turbocharger 30. For example, the turbocharger may have a bypass valve (not shown) operable to vary the proportion of the exhaust gases that flow through turbine 30b and therefore vary the pressure generated by compressor 30a, and the bypass valve may be controllable by the engine controller 32.

Engine controller 32 may comprise a processor and an electronic memory. The electronic memory may have an engine map that relates a set of input conditions including the accelerator pedal position to one or more engine control parameters. The engine control parameters may include one or more of: throttle valve position; fuel mass flow rate; air mass flow rate; cylinder inlet valve opening time; cylinder inlet valve opening duration; fuel ignition time and turbocharger bypass valve position.

The gear ratio of gearbox 18 is controlled by gear selector 28 which is operable by a user to select one of a plurality of gear ratios. Gear selector 28 is illustrated directly coupled to gearbox 18. However, it will be understood that a gearbox controller could additionally be provided to actuate changes in the gear ratio in response to changes in the position of gear selector 28.

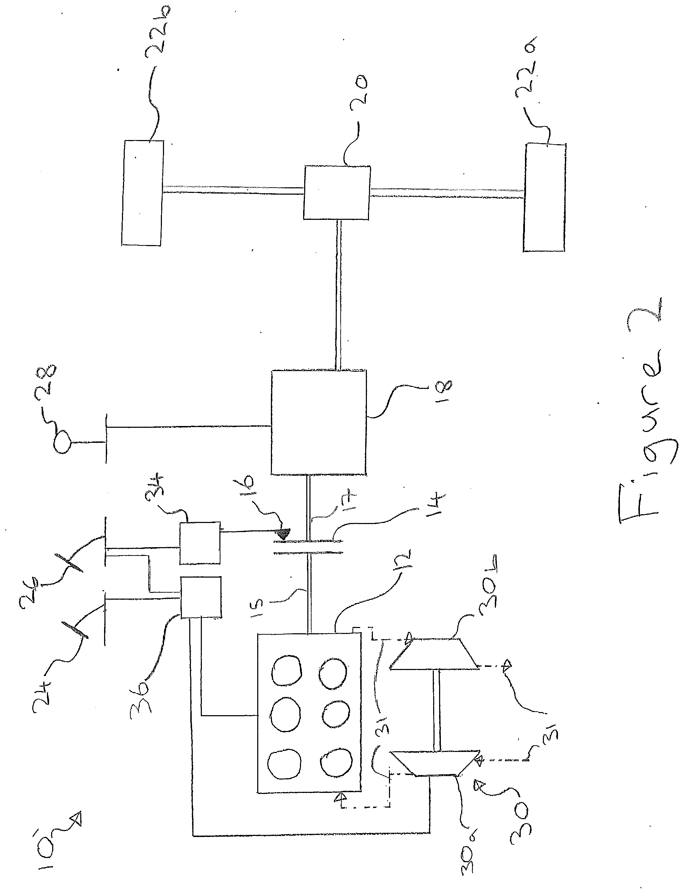

Figure 2 shows a powertrain of a vehicle 10' in an embodiment of the present invention. As can be seen in figure 2, many of the components are the same as those used in the powertrain shown in figure 1, and equivalent components have been referred to using the same reference numerals as the corresponding components in figure 1. Components described in relation to figure 1 that are the same in figure 2 will not be described in detail again but it will be understood that they function in the same way as the components shown in figure 1.

In the embodiment illustrated in figure 2 the engine controller 36 receives inputs indicative of the position of both the accelerator pedal 24 and the clutch pedal 26. Accordingly, the engine controller 36 can control the engine 12 and the turbocharger 30 in dependence on both the position of the accelerator pedal 24 and the position of the clutch pedal 26.

Engine controller 36 comprises a processor and an electronic memory having a plurality of engine maps stored thereon. Each engine map relates a set of input conditions including the accelerator pedal position to one or more engine control parameters. The engine control parameters may include, without limitation: throttle valve position; fuel mass flow rate; air mass flow rate; cylinder inlet valve opening time; cylinder inlet valve opening duration; fuel ignition time and turbocharger bypass valve position. Engine controller 36 is configured to select one of the plurality of engine maps stored in the memory thereof and to control the engine 12 and/or the turbocharger 30 using the selected engine map. During a launch of the vehicle the engine controller 36 is configured to select one of the engine maps in dependence on the input indicative of the position of the clutch pedal 26. Changing the engine map in dependence on the position of the clutch pedal allows the controller to manage the amount of energy that is absorbed by the clutch 14 during a launch of the vehicle 10, as will be described in further detail below. In some embodiments a torque smoothing function may be provided to avoid NVH (Noise, Vibration and Harshness) problems during transitions between maps. Such a torque smoothing function may provide blending between the engine control parameters commanded by the pre- and post-change maps during a transition period, thereby avoiding a sudden change in engine power output. However, in other embodiments no torque smoothing function is provided, as the delay caused by inertia of the engine components may be sufficient to prevent the transition from being too sudden.

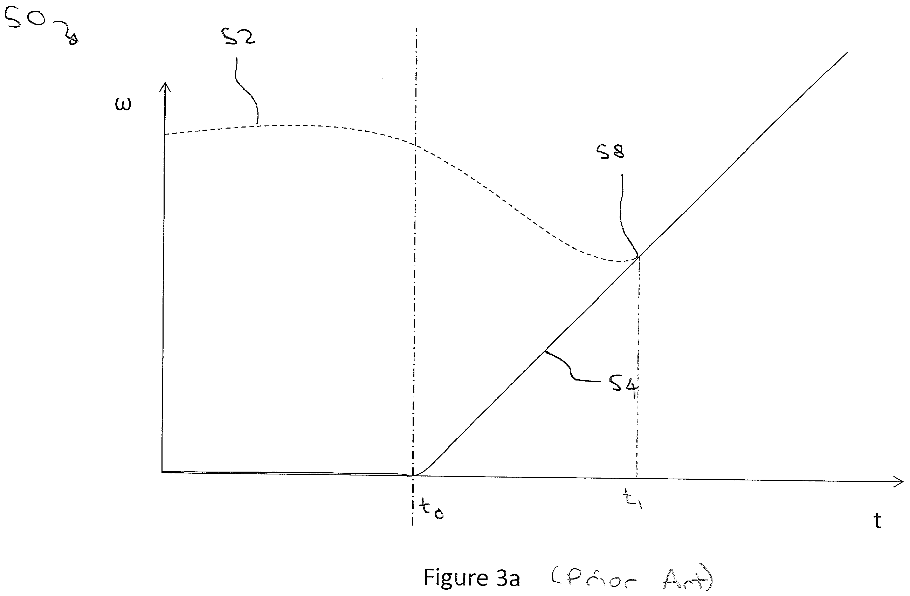

Figure 3a shows a graph of the rotational velocity w of a clutch input shaft 15 and a clutch output shaft 17 against time t during a high-performance launch of a prior art vehicle similar to that illustrated in figure 1. Line 52 shows the rotational velocity of the clutch input shaft 15 and line 54 shows the rotational velocity of the clutch output shaft 17. Before time to the clutch is in the fully open state (i.e. the clutch pedal is fully depressed and the clutch plates are not in contact with one another) and the clutch input shaft is rotating at high rotational velocity, for example a rotational velocity corresponding to an engine speed of approximately 6000rpm. At time to the driver begins to release the clutch pedal so that some torque may be transmitted through the clutch, thereby causing a slight decrease in the rotational velocity of the input shaft 15 and an increase in the rotational velocity of the output shaft 17. Between to and $t_1$ the driver continues to release the clutch pedal and the rotational velocities of the input shaft 15 and the output shaft 17 converge, until they become the same at point 58 and time $t_1$. At this stage the clutch is fully closed so that the input shaft cannot rotate relative to the output shaft. Throughout the launch depicted in figure 3a the driver maintains a constant position of the accelerator pedal at a position close to the fully depressed (i.e. "full throttle") position of the accelerator pedal, and the engine operating parameters are determined according to the throttle pedal position by reference to a single engine map, which may be the only engine map that the vehicle is configured to use or which may be a specific engine map for the mode in which the vehicle is currently operating, such as a "sport" mode. The position of the clutch pedal 24 is not an input parameter to the engine map.

The energy absorbed by a clutch during a launch of a vehicle can be determined according to equation 1:

$$(1) \qquad \int_{t0}^{t1} T_i(t)\omega_i(t) - T_O(t)\omega_O(t)dt = M(H_1 - H_0)$$

In equation 1 $T_i$ and $T_O$ represent the torque transmitted by the input and output shafts, respectively, and $\omega_O$ and $\omega_O$ represent the rotational velocities of the input and output shafts respectively. $M(H_1 - H_0)$ represents the enthalpy change in the clutch. It will be understood that $T_i(t)w_i(t)$ represents the instantaneous power transmitted to the clutch by the input shaft 15 and $T_O(t)\omega_O(t)$ represents the instantaneous power transmitted away from the clutch by the output shaft 17. Accordingly the enthalpy change in a clutch during a launch is equal to the energy lost in the clutch during the launch.

As can be seen in figure 3a, the difference in rotational velocity between input shaft 15 and output shaft 17 decreases relatively slowly after to, so a relatively large amount of energy is absorbed by the clutch 15 during the launch depicted in figure 3a, especially during the initial portion of the launch.

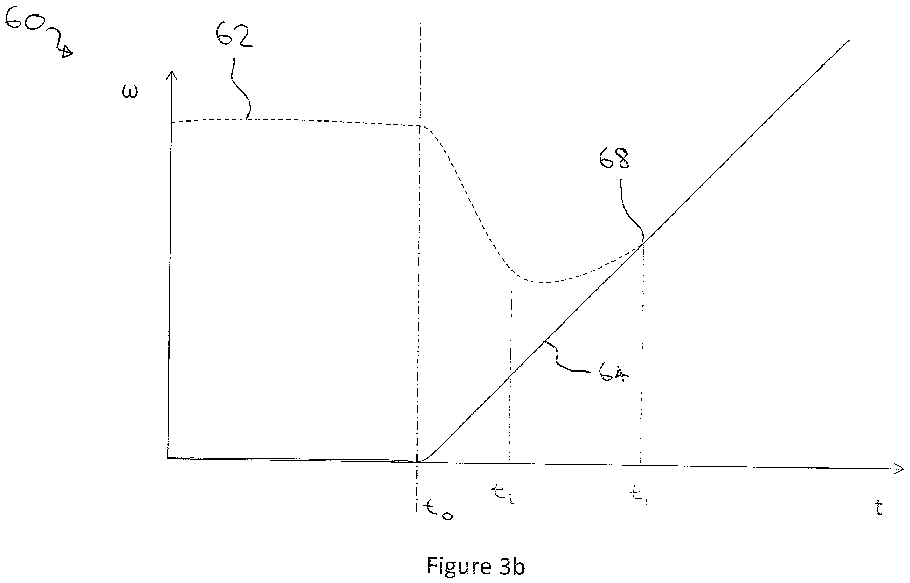

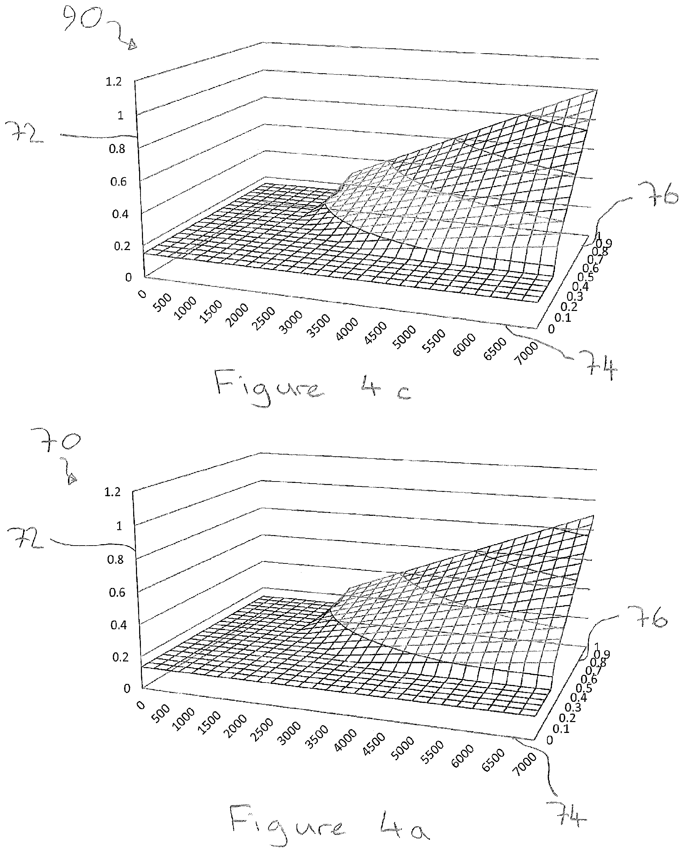

Figure 3b shows a graph of the rotational velocity w of a clutch input shaft 15 and a clutch output shaft 17 against time t during a high-performance launch of a vehicle 10' as shown in figure 2, wherein the vehicle is provided with an engine controller 36 in an embodiment of the present invention. Line 62 shows the rotational velocity of input shaft 15 and line 64 shows the rotational velocity of output shaft 17. Before time to the clutch is in the fully open state (i.e. the clutch pedal is fully depressed and the clutch plates are not in contact with one another) and the clutch input shaft is rotating at high rotational velocity, for example a rotational velocity corresponding to an engine speed of approximately 6000rpm. With the vehicle stationary and the clutch in a fully open state the engine controller 36 selects a default engine map 90 (see figure 4c) to control the engine 12.

At time to the driver begins to release the clutch pedal so that some torque may be transmitted through the clutch. At this point the engine controller 36 deselects the default engine map 90 and instead selects a first engine map 70 (see figure 4a) that provides a reduced power output for a given set of input conditions compared to the default engine map. In this embodiment the first engine map 70 provides a reduced fuel mass flow rate for given values of accelerator pedal position and engine rotational velocity compared to the default engine map 90. However, it will be understood that the first engine map could provide a reduced power output compared to the default engine map 90 by changing other engine parameters, for example throttle valve position, turbocharger wastegate valve position, engine ignition timing or engine cylinder inlet or outlet valve opening time and/or duration. Selection of the first engine map (70) causes the speed of the clutch input shaft to decrease more rapidly than would have been the case if the engine controller 36 had retained the default engine map 90, as was the case in the launch depicted in figure 3a. Accordingly, the speed difference between the input shaft 15 and the output shaft 17 reduces relatively rapidly, thereby reducing the amount of energy that is absorbed by the clutch 14 during the launch. However, selection of the first engine map 70 may have the undesired consequence of reducing the rate of acceleration of the output shaft 17 and therefore the vehicle. This may be perceptible by the driver, who may interpret the reduction in the rate of acceleration as undesired interference from the vehicle. Accordingly, when the position of the clutch reaches an intermediate position, illustrated as $t_i$ in figure 3b, the engine controller 36 deselects the first engine map 70 and selects a second engine map 80 in its place. The intermediate position $t_i$ may be selected to ensure that the time for which the first engine map is selected is sufficiently short that the change in engine map does not cause a significant reduction in vehicle acceleration caused by the selection of the first engine map.

When the engine is controlled using the second engine map 80 it is configured to produce an increased power output for a given set of input conditions as compared to the first engine map 70 and the default engine map 90. In this embodiment the second engine map 80 provides increased fuel and air mass flow rates for given values of accelerator pedal position and engine rotational velocity compared to the default engine map. However, it will be understood that the second engine map 80 could provide an increased power output compared to the default engine map 90 by changing other engine parameters, for example turbocharger wastegate valve position or engine ignition timing or engine valve opening time and/or duration.

Selection of the second engine map 80 allows the vehicle to provide increased acceleration when the clutch is between the intermediate position and the fully closed position. However, because the difference in rotational velocity between the input and output shafts is relatively small when the second engine map is selected the amount of energy that is absorbed by the clutch is relatively small. When the clutch is fully closed at time $t_1$ the launch is complete and the controller 36 deselects the second engine map and reselects the default engine map. In some embodiments the second engine map may be configured to control the engine to produce a higher power output than it would be rated to produce in continuous use, or to control the turbocharger to produce a higher boost than it would be rated to produce in continuous use. This brief increase beyond the rated power output of the engine and/or boost of the turbocharger may be referred to as an "overboost". Such an overboost is unlikely to damage the components, provided it is only maintained for a short period of time and only occurs when the clutch is partially open.

The average acceleration during a launch of a vehicle using the controller of the present invention may be substantially the same as or even greater than the average acceleration of a vehicle using a prior art controller that maintains the same engine map throughout the launch. However, the amount of energy that is absorbed by the clutch 14 may be reduced because the average rotational velocity difference between the input shaft 15 and the output shaft 17 over the duration of the launch is reduced. A particular advantage of this is that it reduces the amount of heat energy that must be absorbed by the clutch during the launch, so a risk of the clutch overheating is reduced. This may allow a vehicle designer to omit parts of the vehicle that would otherwise need to be provided to actively or passively cool the clutch, or to specify a smaller clutch than would otherwise be required, potentially saving cost and weight.

Figures 4a-c show first, second and third engine maps that can be used to calculate the required fuel mass flow rate (shown in axis 72 and expressed in arbitrary units) from the current values of engine rotational velocity (shown on axis 74 and expressed in revolutions per minute) and accelerator pedal position (shown on axis 76 and expressed in arbitrary units). The third engine map 90 shown in figure 4c corresponds to a "default" map for the engine. As can be seen in figure 4a, the fuel mass flow rate when the engine is operating in accordance with the first engine map 70 is reduced compared to that when the engine is operating in accordance with the default engine map over a substantial portion of the engine operating range. The first engine map 70 is selected when the clutch is between the fully open position and the intermediate position (i.e. between to and $t_i$ in figure 3b).

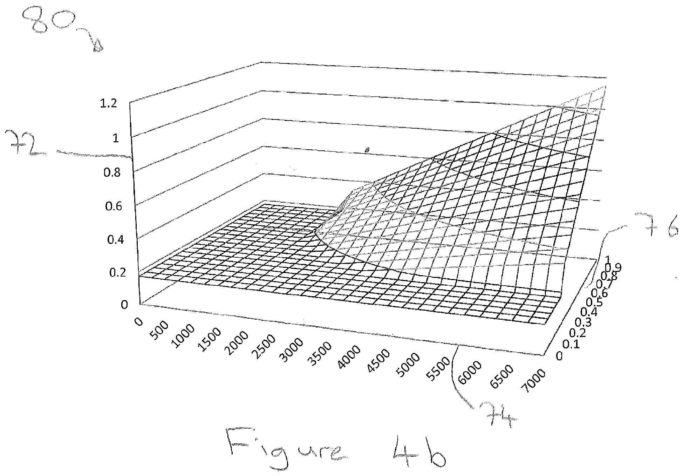

The second engine map 80 shown in figure 4b is selected when the clutch is between the intermediate position and the fully closed position (i.e. between $t_i$ and $t_1$ in figure 3b). As can be seen in figure 4b, the fuel mass flow rate when the engine is operating in accordance with the second engine map 80 is increased compared to that when the engine is operating in accordance with the default engine map over a substantial portion of the engine operating range.

Engine maps 70, 80, 90 show the target fuel mass flow rate for given values of engine rotational velocity and accelerator pedal position. It will be understood that further engine maps may also be provided, for example an engine maps relating accelerator pedal position and engine rotational velocity to the required air mass flow rate, to the required position of a wastegate valve of a turbocharger, or to the boost to be provided by a supercharger could also be provided.

In another embodiment of the present invention an engine controller 36 may select a first engine map 70 that provides reduced power output compared to a default engine map 90 when the clutch position is between a fully open position and an intermediate position, and reselects the default engine map when the clutch position is between the intermediate position and a fully closed position. Such an embodiment may provide significant reductions in the amount of energy absorbed by a clutch, although it may also slow down the vehicle acceleration to some extent.

A single engine controller 36 may be operable to control the engine 12 in embodiments that do and do not provide a second engine map 80 that produces increased power output relative to the default engine map 90 during launch. For example, when a "sport" mode is engaged the controller may select the second engine map 80 when the clutch pedal is between the intermediate position and the fully closed position and when an "eco" or "normal" mode is engaged the controller may select the default engine map 90 when the clutch pedal is between the intermediate position and the fully engaged position. In certain modes the controller may be operable to inhibit control of the engine map in dependence on the position of the clutch pedal.

The engine controller 36 of embodiments of present invention may also be operable to control an engine to provide rapid transitions between different engine maps. Such rapid transitions may be provided irrespective of how many different engine maps 70, 80, 90 may be selected in dependence on the position of a clutch pedal.

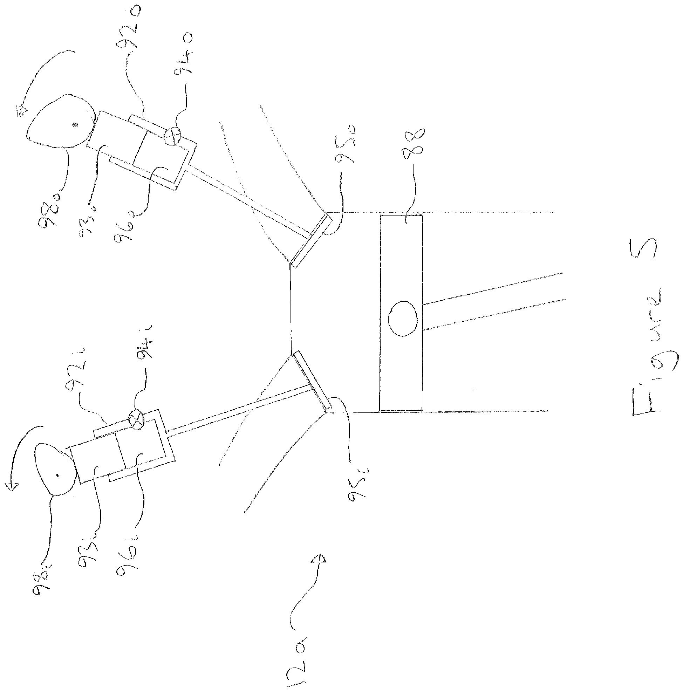

Rapid transitions between engine maps may be effected using variable valve lift systems, for example a continuously variable valve lift (CVVL) system. Figure 5 shows a cross section through a cylinder 12a of an engine, which may be an engine 12 as shown in figure 2, having a CVVL system. The engine may comprise one or more of the cylinders shown in figure 5. Cylinder 12a has active inlet and outlet tappets 92i, 92o, which control valves 95i, 95o. The tappets 92i, 92o are biased into the closed positions shown in the figure and can be opened by cams 98i, 98o. Each tappet 92i, 92o is provided with a follower 93i, 93o and reservoir of hydraulic fluid 96i, 96o having a bleed valve 94i, 94o that is configured to either allow or prevent flow of hydraulic fluid into and out of the reservoir 96i, 96o. The opening and closing of bleed valves 94i, 94o is controlled by a controller, for example engine controller 36. When the one of the bleed valves 94i, 94o is open the corresponding cam is not able to lift the corresponding valve. Instead, the follower 93i, 93o is pushed into the reservoir 96i, 96o, causing hydraulic fluid to flow out of the reservoir via the valve 94i, 94o. Accordingly, the active tappets are operable to vary the valve opening time and opening duration of the valves 95i, 95o.

A CVVL system as shown in figure 5 may be particularly advantageously applied when switching to an engine map that causes the engine power output for the current operating conditions to change compared to the previously selected engine map, as adjustment of the active tappets 92i, 92o may produce a rapid change in the rotational velocity of an engine 12.

For example, the power output produced by an engine 12 and the rotational velocity thereof may be rapidly reduced by using active tappet 92i to keep the inlet valve 95i closed until a relatively late stage of an induction stroke of the engine. This reduces the pressure within the cylinder 12a until the inlet valve 95i is opened, thereby causing a resistance to rotation of the crankshaft (not shown) during the induction stroke, so that the torque produced by the engine 12 and the rotational velocity thereof is reduced. Furthermore, late opening of the inlet valve 95i reduces the amount of air that is allowed into a cylinder during an induction stroke, which has the effect of reducing the amount of power that is produced during the next power stroke. This allows the engine power output to be rapidly reduced in response to a change in engine map and causes some of the kinetic energy stored in the rotating engine to be dissipated by creating low pressure in the cylinders during induction strokes, which can cause the engine to slow down. Dissipating energy within the engine 12 during a launch so as to reduce the speed difference between the input and output shafts of a clutch 14 may reduce the amount of energy absorbed by the clutch 14. Alternatively, or in addition, the CVVL system may be operable to rapidly reduce the power produced by an engine 12 by reducing the opening duration of outlet valve 95o during an exhaust stroke of the engine. For example, the outlet valve 95o may be closed before an exhaust stroke is completed, thereby retaining some combustion gas within the cylinder 12a. This causes high pressure within the cylinder after the valve 95o has been closed, which acts to resist rotation of the crankshaft. Furthermore, the presence of the combustion gas within the cylinder reduces the amount of air that can flow into the cylinder on the next induction stroke, which in turn reduces the amount of combustion energy that can be produced on the next power stroke. Reducing the power output of an engine 12 in this way may be particularly advantageous during a launch as depicted in figure 3b when the engine controller 36 deselects the third (default) engine map and selects the first engine map at time to.

It will be understood that other variable valve lift systems could also be used to reduce the amount of air allowed into a cylinder during an induction stroke or the amount of combustion gas allowed out of a cylinder during an exhaust stroke, thereby to rapidly reduce the amount of power produced by an engine. Furthermore, a CVVL system or other variable valve lift system could also be used to provide a rapid transition to an engine map that causes the engine to provide a higher power output than the previously selected engine map, for example by increasing the lift height and/or duration of the inlet valve 95i during an induction stroke of the engine, thereby increasing the mass flow rate of air through the engine.

A variable valve lift system such a CVVL system as shown in figure 5 may also be used to rapidly increase the power output of an engine during a transition to an engine map that causes the engine to produce increased power output compared to the previously selected engine map. This may be achieved by controlling the bleed valves 94i to increase the lift height and/or duration of valve 95i during induction strokes of the engine 12. This may increase the power produced by the engine 12 more quickly than adjusting a conventional throttle valve, because an inlet manifold is generally disposed between a throttle valve and the inlet valve of the cylinders so the fluid capacitance of the inlet manifold introduces a delay between a change in the position of a throttle valve and a corresponding change in the air mass flow rate.

Rapid transitions to an engine map that causes the engine to provide a higher power output than the previously selected engine map may alternatively be effected by providing a brief increase in the boost (i.e. the increase in pressure at the engine inlet manifold) provided by a turbocharger 30, or an electrically driven supercharger. Such a brief increase in the boost provided by a turbocharger or a supercharger may be termed an "overboost", as the boost that is briefly provided may be higher than what the turbocharger or supercharger would be rated to provide during steady-state operation.

In another embodiment, the engine controller of the present invention may be operable to manage the amount of energy absorbed by a clutch 14 during transitions between gear ratios of a gearbox 18. In particular, a variable valve lift system such as the CVVL system shown in figure 5 may be used to reduce the amount of energy absorbed by a clutch during an upshift.

During upshifts the rotational velocity of the engine 12 of a vehicle reduces, as the engine rotational velocity required at a given road speed is lower when a higher ratio of the gearbox 18 is selected. Accordingly, a driver will typically at least partially release the accelerator pedal 24 at the same time as depressing the clutch pedal 26, so as to allow the engine rotational velocity to reduce to a value approximately corresponding to the rotational velocity that the engine will turn at when the new gear is selected and the clutch is released. However, if a vehicle 10 is being driven particularly aggressively, for example on a race track, then upshifts may be performed too quickly to allow the engine speed to reduce sufficiently before the clutch 26 pedal is released, so part of the excess energy in the engine may be absorbed by the clutch 14 when the clutch pedal 26 is released. This may cause the clutch 14 to heat up significantly, particularly because aggressive driving may require frequent gear changes, so the total amount of energy accumulated in the clutch 14 may be high.

The CVVL system shown in figure 5 may be used to rapidly reduce the rotational velocity of an engine 12 by reducing the inlet valve lift height or duration during an induction stroke of the engine, or by reducing the outlet valve lift height or duration during an exhaust stroke of the engine, as described above in relation to effecting rapid transitions between engine maps.

The engine controller 36 may determine that an upshift is occurring when the clutch pedal 26 is depressed and the user has moved the gear selector 28 into a new position corresponding to a higher ratio of gearbox 18. At this point the user is likely to release the clutch pedal 26, thereby reconnecting the engine 12 to the gearbox 18. The speed of the engine after the gear ratio has been shifted up and the clutch pedal has been released is likely to be lower than the speed of the engine before the upshift event. Accordingly, the amount of energy absorbed by the clutch 14 may be reduced by reducing the speed of the engine so that there is little or no speed difference between the clutch input shaft 15 and the clutch output shaft 17. The required engine speed to minimise the energy that is absorbed by the clutch when it is released can be calculated as the product of the rotational velocity of the driven wheels 22a, 22b and the ratio of the gearbox 18 in the newly selected gear ratio.

The amount of energy absorbed during an upshift event can be reduced by rapidly reducing the rotational velocity of the engine 12 before the clutch pedal 26 is released and the clutch 14 is engaged. In the case of a transition during aggressive driving in which the clutch pedal 26 is released relatively quickly driving the rotational velocity of the engine may be reduced using a CVVL system as shown in figure 5. For example, when engine controller 36 has determined that an upshift is in progress and the driver is about to release the clutch pedal 26 the controller 36 may control the bleed valve 94i to delay opening of the inlet valve 95i until a late stage in the induction strokes. This causes the pressure within the cylinders during the induction strokes to be relatively low, so that turning of the crankshaft is resisted and the rotational velocity of the engine 12 is reduced. The controller 36 may apply feedback control to the delayed opening of the inlet valves 95i, so that the engine 12 reaches the target rotational velocity before the clutch 14 is reengaged but does not overshoot the target rotational velocity. As described above, the target rotational velocity is preferably selected such that it causes the clutch input shaft 15 to rotate at substantially the same rotational velocity as the clutch input shaft 17.

It will be understood that the power output of an engine is the product of the torque produced by the engine and the rotational velocity of the engine. Accordingly, reducing the power produced by the engine at a constant load may comprise reducing the rotational velocity of the crankshaft of the engine.

Throughout the present disclosure the term "engine map" is used to mean a function that is used to calculate an engine operating parameter from one or more inputs such as accelerator pedal position and engine rotational velocity. Reference has been made to plural engine maps in some of the above embodiments, with the selection of which map is to be used depending on the position of the clutch pedal. The skilled person will understand that a single map taking the position of the clutch pedal as an additional input could also be used. A single engine map that takes clutch position and one or more other input parameters is considered to include a plurality of maps, each of which can be used to calculate the engine operating parameter from the other input parameters at a given clutch position.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

**Claims**

1. A controller (36) for an engine (12) of a motor vehicle (100), the controller having input means configured to receive an input indicative of a position of a clutch pedal (26) of the vehicle, and processing means configured to select one of a plurality of engine maps (70, 80, 90) in dependence on the position of the clutch pedal and to initiate control of the engine using the selected engine map,

wherein, during a launch of the vehicle the processing means is configured to:

select a first engine map (70) when the position of the clutch pedal is between a fully open position and an intermediate position;
select a second engine map (80) when the position of the clutch pedal is between the intermediate position and a fully closed position; and
select a third engine map (90) when the position of the clutch pedal is in the fully closed position,

wherein control of the engine using the first engine map causes the engine to provide reduced power output for a first set of input conditions compared to control of the engine using the third engine map and control of the engine using the second engine map causes the engine to provide increased power output for the first set of input conditions compared to control of the engine using the third engine map.

2. A controller (36) as claimed in claim 1, wherein the first, second and third engine maps are fuel maps, wherein:

the first engine map (70) provides a reduced fuel injection rate compared to the third engine map (90), thereby to provide a reduced power output; and
the second engine map (80) provides an increased fuel injection rate compared to the third engine map (90), thereby to provide an increased power output.

3. A controller (36) as claimed in claim 1 or claim 2, wherein the controller is configured to select said third engine map (90) when the clutch pedal is in said fully open position.

4. A controller (36) as claimed in claim 3, wherein the controller is configured to initiate individual control of a plurality of variable lift valves (95i, 95o), each of said variable lift valves being associated with one of a plurality of cylinders (12a) of the engine (12),
wherein the controller is configured to initiate control of the variable lift valves to reduce the power output provided by the engine during a transition between said third engine map (90) and said first engine map (70).

5. A controller (36) as claimed in any preceding claim, wherein the controller is configured to initiate individual control of a plurality of variable lift valves (95i, 95o), each of said variable lift valves being associated with one of a plurality of cylinders (12a) of the engine (12),
wherein the controller is configured to initiate control of the variable lift valves to reduce the power output provided by the engine during a transition between said second engine map (80) and said third engine map (90).

6. A controller (36) as claimed in claim 4 or claim 5, wherein said variable lift valves are variable lift inlet valves (95i) and the controller is configured to control the plurality of variable lift inlet valves to reduce a mass of air allowed into the cylinder during an induction stroke of the cylinder, thereby to reduce the power output provided by the engine.

7. A controller (36) as claimed in any preceding claim, wherein the controller is configured to control a supercharger (30) of the engine, wherein the controller is configured to control the supercharger to increase the power output provided by the engine during a transition between the first engine map and the second engine map.

8. A controller (36) as claimed in claim 6, wherein the controller is configured to control the supercharger to provide an overboost during a transition between the first engine map and the second engine map.

9. A controller (36) as claimed in claim 7 or claim 8, wherein the supercharger is a turbocharger (30).

10. A controller (36) as claimed in any preceding claim, wherein the selection of engine maps in dependence on the clutch position may be selectively activated or deactivated by a user of the vehicle.

11. A controller (36) as claimed in any preceding claim, wherein the first set of input conditions comprises an input relating to an accelerator pedal (24) position and an input relating to a rotational velocity of the engine.

12. A method of controlling an engine (12) of a motor vehicle (100) comprising:

receiving an input indicative of a position of a clutch pedal (26) of the vehicle;
controlling the engine using a first engine map (70) when the position of the clutch pedal is between a fully open position and an intermediate position;

controlling the engine using a second engine map (80) when the position of the clutch pedal is between the intermediate position and a fully closed position; and

controlling the engine using a third engine map (90) when the position of the clutch pedal is in the fully closed position,

wherein control of the engine using the first engine map causes the engine to provide reduced power output for a first set of input conditions compared to control of the engine using the third engine map and control of the engine using the second engine map causes the engine to provide increased power output for the first set of input conditions compared to control of the engine using the third engine map.

13. Computer software executable on a processor so as to implement the method of claim 12; optionally the computer software is stored on a computer readable medium.

14. An engine comprising a controller as claimed in any one of claims 1-11.

15. A vehicle comprising a controller as claimed in any one of claims 1-11, a computer program product as claimed in claim 13 or an engine as claimed in claim 14.

Figure 1 (Prior Art)

Figure 2

Figure 3a (Prior Art)

Figure 3b

90

72

76

74

Figure 4c

70

72

76

74

Figure 4a

Figure 4b

Figure 5

100

Figure 6

Europäisches
Patentamt

European
Patent Office

Office européen
des brevets

## EUROPEAN SEARCH REPORT

Application Number

EP 17 16 1148

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2012/019995 A1 (CONTINENTAL AUTOMOTIVE GMBH [DE]; WEISS FRANK [DE]) 16 February 2012 (2012-02-16) * abstract * * figures 3, 4 * * claims 1, 3 * ----- | 1-15 | INV. F02D41/30 F02D41/24 F02D41/02 F02D41/00 B60W30/184 B60W30/186 B60W10/02 F02D41/10 F02P5/15 |
| A | EP 2 913 504 A1 (AISIN SEIKI [JP]) 2 September 2015 (2015-09-02) * abstract * * figures 2,3 * * paragraph [0002] * * paragraph [0006] * * paragraph [0062] * * paragraph [0098] * * claims 1, 2, 7 * ----- | 1-15 | |
| A | DE 10 2006 029044 A1 (FORD GLOBAL TECH LLC [US]) 3 January 2008 (2008-01-03) * abstract * * figures 1, 2 * * claims 1, 2, 9, 10 * ----- | 1-15 | |
| A | DE 199 26 147 A1 (VOLKSWAGEN AG [DE]) 14 December 2000 (2000-12-14) * claim 5 * ----- | 1-15 | |

| TECHNICAL FIELDS SEARCHED (IPC) |
|---|
| F02D B60W F02P |

The present search report has been drawn up for all claims

| Place of search | Date of completion of the search | Examiner |
|---|---|---|
| The Hague | 4 September 2017 | Kämper, Fabian |

EPO FORM 1503 03.82 (P04C01)

## ANNEX TO THE EUROPEAN SEARCH REPORT
## ON EUROPEAN PATENT APPLICATION NO.

EP 17 16 1148

04-09-2017

| Patent document cited in search report | | Publication date | Patent family member(s) | | Publication date |
|---|---|---|---|---|---|
| WO 2012019995 | A1 | 16-02-2012 | DE 102010033853 | A1 | 09-02-2012 |
| | | | WO 2012019995 | A1 | 16-02-2012 |
| EP 2913504 | A1 | 02-09-2015 | CN 104736822 | A | 24-06-2015 |
| | | | EP 2913504 | A1 | 02-09-2015 |
| | | | JP 5849930 | B2 | 03-02-2016 |
| | | | JP 2014084815 | A | 12-05-2014 |
| | | | WO 2014065061 | A1 | 01-05-2014 |
| DE 102006029044 | A1 | 03-01-2008 | NONE | | |
| DE 19926147 | A1 | 14-12-2000 | NONE | | |

EPO FORM P0459

For more details about this annex : see Official Journal of the European Patent Office, No. 12/82